# DEMANDE DE BREVET EUROPEEN

(11) **EP 2 999 137 A1**
(43) Date de publication de la demande: **23.03.2016**
(21) Numéro de dépôt: 15185998.0
(22) Date de dépôt: 21.09.2015
(51) Int. Cl.: H04B 7/185

(54) **PROCÉDÉ DE GESTION DYNAMIQUE DE RESSOURCES ET SYSTÈME ASSOCIÉ**

(30) Priorité: 22.09.2014 FR 1402106
(71) Demandeur: THALES, 92400 Courbevoie (FR)
(72) Inventeur: TAYRAC, Pierre, 31180 Saint Géniès Bellevue (FR); COURSEILLE, Olivier, 31320 Auzeville Tolosane (FR); BLOSSE, Cyrille Yves Joël, 31037 Toulouse Cedex 1 (FR); ROGER, Bruno, 31037 Toulouse Cedex 1 (FR)
(74) Mandataire: Brunelli, Gérald

(57) **Abrégé**

La présente invention concerne un procédé d'allocation dynamique de ressources pour au moins un réseau d'accès satellite (14) associé à au moins un satellite (15) de télécommunication comprenant une charge utile flexible en fréquence, lesdits au moins un réseau d'accès satellite (14) comprenant une pluralité de gestionnaires d'allocation de la ressource (141). Le procédé comprend l'acquisition de la largeur de bande souhaitée par chaque gestionnaire d'allocation de la ressource, une reconfiguration de la charge utile des au moins un satellite (15) en tenant compte de la largeur de bande souhaitées par chaque gestionnaires d'allocation de la ressource (141) et des ressources fréquentielles disponibles à bord de chaque satellite et une étape d'allocation de fréquence aux différents gestionnaires d'allocation de la ressource, en tenant compte de la largeur de bande souhaitée par chaque gestionnaires d'allocation de la ressource (141) et des ressources fréquentielles disponibles à bord de chaque satellite (15).

## Description

La présente invention concerne le domaine des télécommunications par satellite. La présente invention concerne plus particulièrement un procédé et un système de gestion dynamique de ressources satellite, et de ses interfaces avec le satellite et le segment sol.

Le rôle des satellites de communication dits «transparents» est essentiellement de retransmettre, après amplification, des signaux émis par des stations sol émettrices sur des liaisons montantes vers des stations sol réceptrices, via des liaisons descendantes. Ces satellites reçoivent des ensembles de signaux émis par les stations sol émettrices qui sont ensuite distribués sur un ensemble de canaux d'entrée et, conformément à une configuration prédéterminée, acheminés vers des canaux de sortie pour être émis vers les stations sol réceptrices. On parle dans ce contexte de routage des signaux à bord du satellite.

Actuellement, la configuration du routage des signaux dans les satellites est le plus souvent statique. Ainsi, lorsqu'un système de télécommunication par satellite est déployé, on partitionne les ressources en puissance et en fréquence du satellite par des fonctions de planification (plan de mission, plan de fréquence) aux différents réseaux d'accès satellite ou systèmes de modems, et ce transpondeur par transpondeur. On définit un certain nombre de canaux, de largeur prédéterminée et cette configuration reste figée tout au long de la vie du satellite. La durée de vie d'un satellite de télécommunication pouvant dépasser plus de quinze ans, cette configuration statique ne permet pas d'adapter la charge utile aux évolutions du trafic de données. De même, au sein de cette configuration figée, l'allocation entre réseaux d'accès satellite est également statique. Son évolution nécessite une nouvelle planification et se traduit par des interruptions de services.

Il existe des satellites dont la charge utile est flexible permettant ainsi d'optimiser l'exploitation du satellite pendant sa durée de vie. Cette opération est basée sur une replanification «manuelle» de la charge utile et est généralement réalisée sur la base d'une ingénierie du trafic établi ou sur une évolutions des contrats de services utilisateur. Un inconvénient de cette reconfiguration est qu'elle est définie pour le temps de la mission et qu'elle reste figée tout au long de cette dernière.

Un but de l'invention est notamment de corriger un ou plusieurs des inconvénients de l'art antérieur en proposant une solution permettant une gestion automatisée des équipements flexibles du ou des satellites de télécommunication en fonction de l'évolution temporelle et géographiques des flux usagers réellement établis, dans le respect des contrats de service utilisateur.

A cet effet, l'invention a pour objet un procédé d'allocation dynamique de ressources pour au moins un réseau d'accès satellite associé à un groupe d'au moins un satellite de télécommunication comprenant une charge utile flexible en fréquence, ledit groupe d'au moins un réseau d'accès satellite comprenant une pluralité de gestionnaires d'allocation de la ressource, ledit procédé étant mis en oeuvre par un dispositif d'allocation dynamique de ressources, et comprenant :
- une étape d'acquisition d'un signal représentatif de la valeur de la largeur de bande souhaitée par chaque gestionnaire d'allocation de la ressource de chaque réseau d'accès satellite,
- une étape de reconfiguration de la charge utile du groupe d'au moins un satellite de télécommunication, en tenant compte des valeurs de largeur de bande souhaitées par chaque gestionnaires d'allocation de la ressource et des ressources fréquentielles disponibles à bord de chaque satellite,
- une étape d'allocation de fréquence aux différents gestionnaires d'allocation de la ressource du groupe d'au moins un réseau d'accès satellite, en tenant compte des valeurs de largeur de bande souhaitées par chaque gestionnaires d'allocation de la ressource et des ressources fréquentielles disponibles à bord de chaque satellite.

Suivant un mode de mise en oeuvre,
- si la somme des valeurs de largeur de bande souhaitées par chaque gestionnaire d'allocation de la ressource est inférieure aux ressources fréquentielles disponibles du satellite, un module d'allocation dynamique de fréquence alloue à chaque gestionnaire d'allocation de la ressource la valeur de la largeur de bande souhaitée,
- si la somme des valeurs de largeur de bande souhaitées par chaque gestionnaire d'allocation de la ressource est supérieure aux ressources fréquentielles disponibles du satellite, un module d'allocation dynamique de fréquence alloue à chaque gestionnaire d'allocation de la ressource une valeur de largeur de bande prédéterminée.

Suivant un mode de mise en oeuvre, le procédé comprend en outre pour chaque gestionnaire d'allocation de la ressource :
- une étape d'acquisition d'un signal représentatif du débit de donnée du gestionnaire d'allocation de la ressource considéré,
- une étape de calcul d'un taux d'utilisation de la bande passante allouée et de comparaison de ce débit avec une valeur plancher prédéterminée,
- si le taux d'utilisation est inférieur à ladite valeur plancher, une étape de réduction de la valeur de la largeur de bande passante allouée en allouant audit gestionnaire d'allocation de la ressource une valeur de largeur de bande passante correspondant à un taux d'utilisation sensiblement égal à ladite valeur plancher.

Suivant un mode de mise en oeuvre, le procédé comprend en outre pour chaque gestionnaire d'allocation de la ressource :
- une étape d'acquisition d'un signal représentatif du débit de données du gestionnaire d'allocation de la ressource considéré,
- si le débit de données dudit gestionnaire d'allocation de la ressource est inférieur à une valeur nominale prédéterminée alors que la valeur de la bande passante allouée à ce gestionnaire est supérieure à ladite valeur nominale, une étape de réduction de la valeur de la largeur de bande passante allouée en allouant audit gestionnaire d'allocation de la ressource une valeur de largeur de bande passante sensiblement égale à ladite valeur nominale.

Suivant un mode de mise en oeuvre, lequel le procédé comprend en outre une étape d'acquisition d'un signal représentatif de la qualité de service associée aux données à transmettre par chaque gestionnaire d'allocation de la ressource et selon lequel le dispositif d'allocation dynamique de ressources augmente en priorité la valeur de la largeur de bande passante des gestionnaires de la ressource les plus prioritaires en utilisant lesdites informations de qualité.

Suivant un mode de mise en oeuvre, au moins un satellite est du type multicanaux et selon lequel le procédé comprend en outre une étape de modification du gain d'au moins un des canaux d'au moins un satellite de télécommunication.

L'invention a également pour objet un système d'allocation dynamique de ressources configuré pour mettre en oeuvre le procédé précédemment décrit, comprenant un dispositif d'allocation dynamique de ressources, au moins un réseau d'accès satellite et au moins un satellite de communication comprenant une charge utile flexible en fréquence,
ledit groupe d'au moins un réseau d'accès satellite comprenant une pluralité de gestionnaires d'allocation de la ressource, chaque gestionnaire d'allocation de la ressource étant configuré pour transmettre des donnés à au moins un modem, chaque gestionnaire d'allocation de la ressource étant connecté au dispositif d'allocation dynamique de ressources et chaque gestionnaire d'allocation de la ressource étant configurer pour délivrer un signal représentatif de la valeur de bande passante souhaitée et pour transmettre ce signal au dispositif d'allocation dynamique de ressources,
ledit dispositif d'allocation dynamique de ressources comprenant au moins un module de calcul configuré mettre en oeuvre le procédé selon une des revendications précédentes et au moins un module configuré pour allouer une valeur de largeur de bande passante aux différents gestionnaires d'allocation de la ressource du groupe d'au moins un réseau d'accès satellite et pour reconfigurer la charge utile de chaque satellite du groupe d'au moins un satellite de télécommunication.

D'autres particularités et avantages de la présente invention apparaîtront plus clairement à la lecture de la description ci-après, donnée à titre illustratif et non limitatif, et faite en référence aux dessins annexés, dans lesquels :
- La figure 1 représente un système de télécommunication connu de l'art antérieur ;
- La figure 2 représente un exemple de mode de réalisation d'un système de gestion dynamique des ressources instantanées disponible d'au moins un satellite selon l'invention ;

Le principe de l'invention repose sur un couplage entre les stations sol et le ou les satellites de télécommunication associés de manière à permettre une gestion dynamique automatisée des équipements flexibles du ou des satellites en fonction de l'évolution temporelle et géographique des flux usagers réellement établis et de la disponibilité réelle de la performance satellite tout en garantissant un engagement de services nominal du système de télécommunication. En fonction de l'évolution du trafic, une reconfiguration de la charge utile est effectuée sur la base dudit trafic au sol afin de garantir la qualité de service. Ce couplage permet de tirer profit des ressources instantanées disponibles en bande et éventuellement en puissance du ou des satellites du système de télécommunication en fonction des besoins des utilisateurs.

De façon avantageuse, cela permet d'optimiser la capacité globale du système de télécommunication dès lors que chaque utilisateur ne requiert pas simultanément une performance maximale de la liaison.

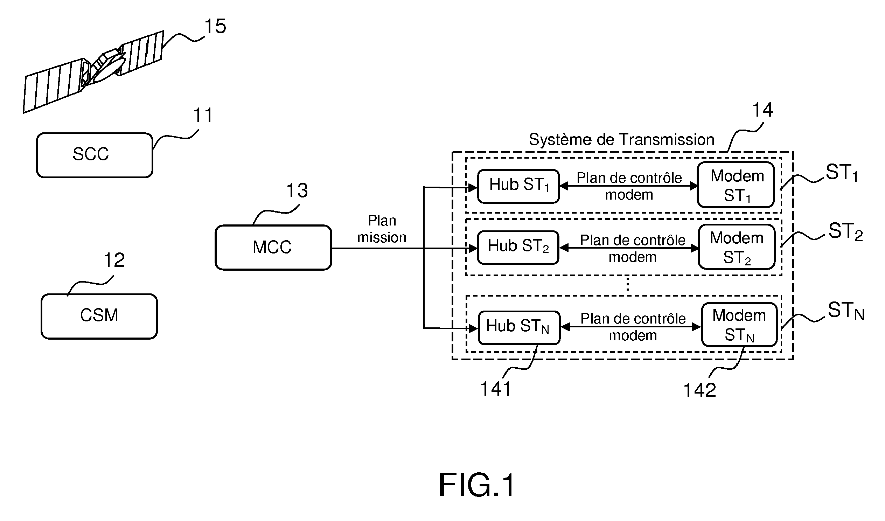

La figure 1 représente un système de télécommunication connu de l'art antérieur. Le système comprend un centre de contrôle des satellites 11 ou SCC pour *Satellite Control Center* selon la terminologie anglo-saxonne. Le centre de contrôle des satellites surveille en permanence le comportement du ou des satellites dont il a la charge notamment à l'aide des données de télémesure. Le centre de contrôle des satellites est le moyen au sol qui contrôle le ou les satellites et qui permet d'assurer le bon fonctionnement du satellite.

Le centre de surveillance des liaisons 12 ou CSM pour *Communication Spectrum Monitoring* selon la terminologie anglo-saxonne surveille la charge utile (ou *payload* selon la terminologie anglo-saxonne) du satellite. Il fournit notamment les caractéristiques radiofréquences et numériques des transpondeurs du satellite. Il permet également de détecter des événements indésirables comme par exemple des problèmes d'interférences ou de brouillage.

Les réseaux d'accès satellite 14 comportent une pluralité de gestionnaires d'allocation de la ressource (ou hub) 141, chaque gestionnaire d'allocation de la ressource 141 gérant au moins un modem 142. Un réseau d'accès satellite comprend un gestionnaire d'allocation de la ressource 141 et au moins un modem 142. Afin de ne pas surcharger la figure, seul un modem 142 par gestionnaire d'allocation de la ressource 141 est représenté sur la figure 1. Les réseaux d'accès satellite 14 sont connectés à un centre de contrôle de mission 13 ou MCC pour «*Mission Control Center*» selon la terminologie anglo-saxonne. Ce centre 13 assure la gestion opérationnelle de la charge utile du satellite. Il définit notamment le plan de mission pour le centre de contrôle des satellites 11 et pour chaque réseau d'accès satellite 14. Ce plan de mission comprend entre autres les tables d'allocation de puissance et de fréquence définissant le taux de partage de ces ressources entre les différents gestionnaires d'allocation de la ressource 141 des différents réseaux d'accès satellite 14.

Comme vu précédemment le plan de mission est défini en début de mission et reste figé tout au long de ladite mission jusqu'à ce qu'un nouveau plan de mission soit planifié manuellement par un opérateur au niveau du centre de contrôle de mission 13. De même la connexion (organisationnelle ou informatique) entre le centre de contrôle de mission 13 et le réseau d'accès satellite 14 est unidirectionnelle et sert entre autres à l'allocation de ressources entre les différents gestionnaires d'allocation de la ressource 141 suivant le taux de partage définit dans le plan de mission. Ainsi chaque gestionnaire d'allocation de la ressource fonctionne de façon indépendante.

Les centres de contrôle des satellites 11, de surveillance des liaisons 12, de contrôle de mission 13 ainsi que les différents gestionnaires d'allocation de la ressource 141 des réseaux d'accès satellite 14 sont généralement répartis entre le centre de contrôle satellite, les centres d'opération de réseaux et les passerelles (ou *gateways* selon la terminologie anglo saxonne) d'ancrage du trafic. Les différents modems 142 sont localisés au niveau des utilisateurs.

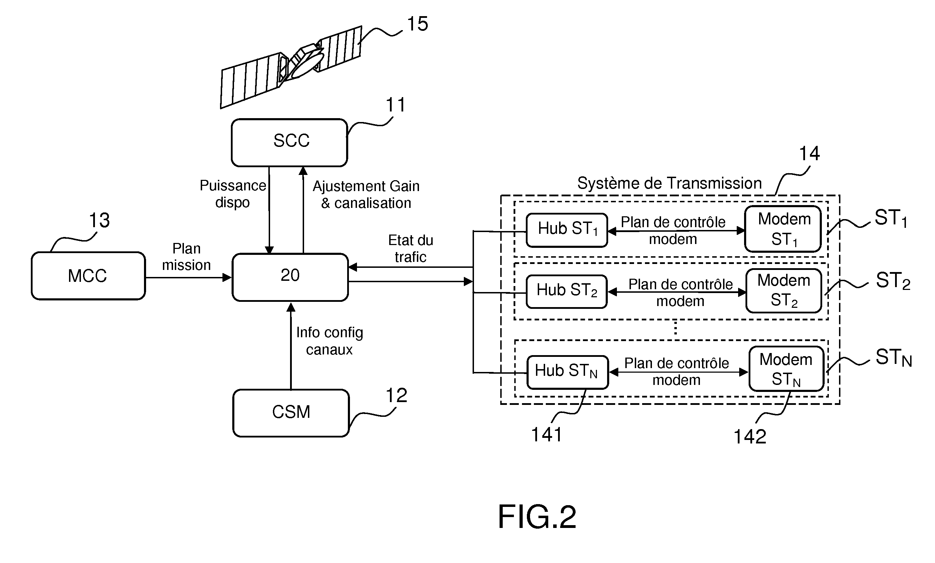

La figure 2 représente un exemple de mode de réalisation d'un système d'allocation dynamique de fréquence d'au moins un satellite 15 selon l'invention.

Le système peut comprendre un centre de contrôle des satellites 11, un centre de surveillance des liaisons 12, un centre de contrôle de mission 13 et un réseau d'accès satellite 14.

Dans le schéma illustré à la figure 2, le système ne gère qu'un satellite 15. Cet exemple n'est nullement limitatif et l'invention peut être généralisée au cas où le système serait en relation avec une pluralité de satellites 15 de télécommunication.

Comme vu précédemment, le centre de contrôle de mission 13 définit notamment le plan de mission pour le centre de contrôle des satellites 11 et pour chaque réseau d'accès satellite 14. Ce plan de mission définit un taux de partage nominal des ressources en bande et en puissance entre les différents gestionnaires d'allocation de la ressource 141 des différents réseaux d'accès satellite 14.

La présente invention concerne notamment des satellites 15 de communication ayant une flexibilité en fréquence, c'est-à-dire ayant une charge utile dont la largeur de bande des canaux peut être ajustée. Il peut s'agir par exemple, d'un ou plusieurs processeurs numériques transparents. De façon avantageuse, ces processeurs permettent d'avoir des canaux dynamiquement reconfigurables, ainsi la configuration du routage des signaux peut être définie à partir de commandes des stations sol.

Le mécanisme proposé répond également à une réallocation de la bande passante entre réseaux d'accès satellite dans une configuration figée du satellite.

Le groupe d'au moins un satellite 15 comprend au moins un satellite multicanaux. Le ou les satellites 15 peuvent être du type transparent, c'est-à-dire réfléchissant les signaux reçus d'une ou plusieurs stations au sol à l'aide de transpondeurs.

Suivant un mode de réalisation le ou les satellites 15 peuvent être des satellites régénératifs c'est-à-dire des satellites décodant le signal reçu pour pouvoir effectuer un traitement sur ce signal et le réémettre vers la terre.

Le groupe d'au moins un satellite peut également être constitué d'une combinaison de satellites transparents et régénératifs.

De façon avantageuse, dans le cas de satellites régénératifs, la solution est optimale car elle permet d'exploiter dynamiquement la capacité régénérative du ou des satellites 15.

Le dispositif d'allocation dynamique 20 de ressources d'au moins un satellite 15 est en charge de l'allocation des ressources en bande et éventuellement en puissance aux différents gestionnaires d'allocation de la ressource 141 des réseaux d'accès satellite 14 en fonction des demandes de trafic en provenance des groupes de modems 142 connectés aux différents gestionnaires d'allocation de la ressource 141 et en fonction des ressources instantanées disponibles au niveau du satellite 15. Ce dispositif 20 est intercalé entre le centre de contrôle de mission 11 et les réseaux d'accès satellite 14. Il permet de coupler les potentiels équipements flexibles à bord du ou des satellites de télécommunication et les stations sol de manière à optimiser l'utilisation des ressources instantanées disponibles en bande passante et éventuellement en puissance. L'intérêt de ce dispositif d'allocation dynamique 20 de ressources est de rendre dynamique la partition des ressources entre les réseaux d'accès satellite en bande passante et éventuellement en puissance à bord des satellites 15 de communications associés au système afin de profiter au mieux de ces ressources en fonction des besoins de débits instantanés de toutes les connexités cumulées. Les niveaux de puissance disponible à bord du satellite 15 pour pouvoir augmenter le gain d'un ou plusieurs canaux peuvent être renseignés à la station sol et plus particulièrement au dispositif d'allocation dynamique 20 de ressources par l'intermédiaire des télémesures.

Dans l'exemple de mode de réalisation illustré à la figure 2, le dispositif d'allocation dynamique 20 est connecté au centre de contrôle des satellites 11, au centre de surveillance des liaisons 12, au centre de contrôle de mission 13 et aux réseaux d'accès satellite 14. Le groupe de réseaux d'accès satellite 14 comprend N réseaux d'accès satellite référencés ST₁ à ST_{N}. Comme précédemment, afin de ne pas surcharger la figure, seul un modem 142 est représenté par gestionnaire d'allocation de la ressource 141. Bien entendu, les réseaux d'accès satellite peuvent en comporter un nombre supérieur.

Au début de la mission, le routage à bord du satellite de télécommunication et la partition de ressources entre les réseaux d'accès satellite sont définis suivant une configuration initiale prédéterminée dans le plan de mission. Cette configuration est ensuite modifiée de façon régulière en fonction des besoins de trafic des différents réseaux d'accès satellite 14. Afin de gérer dynamiquement les ressources instantanées disponibles à bord du satellite, le dispositif d'allocation dynamique 20 de ressources réalise l'acquisition d'un signal représentatif de la valeur de la largeur de bande souhaitée par chaque gestionnaire d'allocation de la ressource 141 de chaque réseau d'accès satellite 14. Cette acquisition de requêtes de largeur de bande peut être réalisée à intervalles réguliers ou de façon non régulière dans le temps.

Suivant un mode de réalisation, l'intervalle de temps entre les différentes acquisitions peut être de l'ordre de quelques secondes ou quelques minutes. Ce signal peut être enregistré, par exemple au moment de l'acquisition, dans une zone mémoire du système de façon à être utilisé ultérieurement.

En plus de ces requêtes de largeur de bande, le dispositif d'allocation dynamique 20 de ressources peut également acquérir, au niveau de chaque gestionnaire d'allocation de la ressource 141, d'autres informations comme par exemple, la qualité de service associée aux données à transmettre par le gestionnaire d'allocation de la ressource (141) considéré.

En fonction de l'évolution de la demande de ressources fréquentielles en provenance des différents gestionnaires d'allocation de la ressource 141, le dispositif d'allocation dynamique de ressources 20 peut, par exemple à l'aide d'un algorithme stocké dans une zone mémoire du système d'allocation dynamique de ressources, reconfigurer la charge utile du satellite 15 de communication afin d'ajuster le routage des signaux à bord du satellite 15 et/ou modifier l'allocation de largeur de bande passante de chaque gestionnaire d'allocation de la ressource 141 du groupe d'au moins un réseau d'accès satellite 14 en tenant compte des valeurs de largeur de bande souhaitées par chaque gestionnaire d'allocation de la ressource 141 et des ressources fréquentielles disponibles à bord de chaque satellite 15. Le dispositif d'allocation dynamique de ressources 20 réalise ainsi une reconfiguration coordonnée des réseaux d'accès satellite 14 et, si nécessaire, de la charge utile du satellite 15 de communication associé comme par exemple le ou les processeurs numériques transparents, sans rupture des services établis.

Le dispositif d'allocation de ressources 20 peut réaliser la somme des valeurs de largeur de bande passantes souhaitées par chaque gestionnaire d'allocation de la ressource 141 de chaque réseau d'accès satellite 14 et comparer cette somme avec la ressource fréquentielle disponible du satellite 15 de télécommunication. A cet effet, le dispositif d'allocation de ressources 20 peut comprendre au moins un module de calcul.

Si la somme des valeurs de largeur de bande passantes souhaitées par chaque gestionnaire d'allocation de la ressource 141 est inférieure à la ressource fréquentielle disponible, le dispositif d'allocation dynamique 20 de ressources peut allouer à chaque gestionnaire d'allocation de la ressource 141 la valeur de la largeur de bande souhaitée. A cet effet, le dispositif d'allocation dynamique 20 de ressources peut comporter au moins un module d'allocation de ressource configuré pour allouer à chaque gestionnaire d'allocation de la ressource 141 des différents réseaux d'accès satellite 14, une valeur de largeur de bande passante.

Pour chaque gestionnaire d'allocation de la ressource 141, la valeur de la largeur de bande déjà allouée peut être comparée à la valeur de bande souhaitée par le gestionnaire d'allocation de la ressource 141 afin de vérifier si la bande allouée est suffisante pour permettre le trafic. Cette comparaison peut, par exemple être réalisée par un module de calcul du dispositif d'allocation de ressources 20. En cas de besoin, si la bande n'est pas suffisante, le module d'allocation dynamique de ressource peut augmenter la valeur de la bande passante allouée. Lorsque la valeur de la bande passante souhaitée est inférieure à la valeur déjà allouée, le module d'allocation de ressource peut diminuer la valeur de la bande passante allouée de façon à libérer de la ressource fréquentielle pour d'autres gestionnaires d'allocation de la ressource 141.

En cas de trafic élevé, si les ressources fréquentielles disponibles à bord du satellite ne sont pas suffisantes pour satisfaire les besoins en bande passante des gestionnaires d'allocation de la ressource 141, c'est-à-dire si la somme des valeurs de largeur de bande passantes souhaitée par chaque gestionnaire d'allocation de la ressource 141 est inférieure à la ressource fréquentielle disponible à bord du satellite, le module d'allocation dynamique de ressource peut allouer à chaque gestionnaire d'allocation de la ressource 141 une valeur de largeur de bande prédéterminée. Le module d'allocation dynamique de ressource peut par exemple allouer à chaque gestionnaire d'allocation de la ressource 141 des différents réseaux d'accès satellite 14, la valeur de largeur de bande prédéfinie dans le plan de mission afin de garantir un engagement de services nominal vis-à-vis de chaque utilisateur du système de télécommunication.

Le centre de surveillance des liaisons 12 peut calculer et transmettre au dispositif d'allocation dynamique 20 un signal représentatif de la configuration des canaux à bord du satellite 15 de télécommunication en terme de largeur de bande passante et de gain. De façon avantageuse, cette information sur l'état des canaux peut permettre au dispositif d'allocation dynamique 20 d'avoir un retour de contrôle sur la configuration des canaux à bord du satellite et ainsi vérifier que le réglage à bord de la charge utile du satellite est bien conforme aux attendus.

Suivant un mode de mise en oeuvre du procédé, le module de calcul du dispositif d'allocation dynamique 20 peut calculer la bande utilisée par chaque gestionnaire d'allocation de la ressource 141 et comparer cette valeur à une valeur plancher prédéterminée traduisant une sous exploitation de la bande allouée.

Lorsque le taux d'utilisation mesuré sur un gestionnaire d'allocation de la ressource 141 devient inférieur à ce taux plancher, le module d'allocation de ressource du dispositif d'allocation dynamique 20 de ressources peut réduire la bande allouée au gestionnaire d'allocation de la ressource 141 sous exploité par exemple en réduisant la valeur de bande allouée au gestionnaire 141 sous exploité à une valeur sensiblement égale à la valeur plancher. Cette valeur plancher peut, par exemple, être sensiblement égale à la valeur nominale prédéterminée dans le plan de mission. La largueur de bande libérée, correspondant à la différence entre la valeur de la largeur de bande allouée et la valeur nominale prédéfinie, peut ainsi être réallouée à un ou plusieurs autres gestionnaires d'allocation de la ressource 141 d'un ou plusieurs réseaux d'accès satellite 14.

Afin de calculer le taux d'utilisation de la bande allouée à un gestionnaire d'allocation de la ressource 141, le dispositif d'allocation dynamique 20 de ressources peut réaliser l'acquisition d'un signal représentatif du débit de données du gestionnaire d'allocation de la ressource 141 considéré. Pour cela, chaque gestionnaire d'allocation de la ressource 141 peut comprendre un dispositif de mesure configuré pour mesurer les différents débits élémentaires en provenance des différents modems 142 dans ledit gestionnaire d'allocation de la ressource et délivrer un signal représentatif d'un débit global. Ce dispositif de mesure peut également être configuré pour transmettre ce signal au dispositif d'allocation dynamique 20 de ressources. Ce signal peut être enregistré simultanément au moment de l'acquisition dans une zone mémoire du système d'allocation dynamique de puissance de façon à être utilisé ultérieurement.

Suivant un mode de mise en oeuvre du procédé, si le module de calcul du dispositif d'allocation dynamique de ressources 20 détecte un gestionnaire d'allocation de la ressource 141 inactif ou dont le trafic est inférieur à une valeur prédéterminée traduisant une très faible activité du gestionnaire 141 alors que la valeur de la largeur de bande passante est supérieure à la valeur nominale prédéterminée dans le plan de mission, il peut décider de réduire la valeur de la bande passante allouée à ce gestionnaire à une valeur sensiblement égale à ladite valeur nominale voire à une valeur inférieure à cette valeur. Dans le cas où la valeur de la largeur de bande passante allouée serait inférieure à la valeur nominale, dès que ce gestionnaire d'allocation de la ressource 141 émet une requête de trafic, la valeur de sa largeur de bande allouée sera rétablie à au moins sa valeur nominale et ce même si ce trafic n'est pas prioritaire, la valeur nominale correspondant à une valeur plancher garantie.

De façon avantageuse, la capacité de réallouer les ressources non utilisées par un ou plusieurs gestionnaires d'allocation de la ressource 141 aux autres gestionnaires 141, permet une exploitation de l'ensemble de la ressource disponible instantanément et donc permet d'accroitre la capacité du système de télécommunication

En cas de conflit, en particulier en cas de manque de ressources disponibles à bord du satellite, pour répondre à un besoin de ressources fréquentielles pour un ou plusieurs réseau d'accès satellite 14, un mécanisme de priorité peut être mis en place dans l'algorithme d'allocation de ressources, de manière à augmenter en priorité, la largeur de bande des gestionnaires de la ressource 141 les plus prioritaires, en utilisant par exemple les informations de qualité de service données par lesdits gestionnaires d'allocation de ressources.

Dans certains cas, lors de la reconfiguration de la charge utile du satellite 15, à la fois les valeurs de largeur de bande passante et de gain ou puissance de certains canaux peuvent d'être réajustées.

A bord des satellites 15 de télécommunication, les canaux sont définis en fonction du trafic à transmettre. Le dispositif d'allocation dynamique de ressources 20 attribue une valeur de gain et de largeur de bande en fonction des caractéristiques du ou des signaux à transmettre. Si le canal transmet le même type de signaux, le dispositif d'allocation dynamique de ressources 20 peut ne modifier que la largeur du canal en fonction du débit de donnée à transmettre. Si le canal doit transmettre un autre type de signal, par exemple ayant une autre forme d'onde plus complexe, le dispositif 20 pourra également modifier le gain du transpondeur à bord du satellite 15.

A bord du satellite 15, les canaux sont également définis pour une connexité entre une couverture et une autre. Lors de la reconfiguration de la charge utile, si la couverture du canal n'est pas modifiée, le dispositif d'allocation dynamique de ressources 20 n'est pas forcément obligé de modifier le gain du canal. De façon différente, si la couverture du canal est modifiée, le dispositif d'allocation dynamique de ressources 20 peut être amené à revoir la valeur du gain attribué au canal.

A titre d'exemple, supposons que le gain d'un canal ait été défini pour une couverture donnée. Si lors d'une reconfiguration de la charge utile d'un satellite 15, ce canal est maintenant attribué à un nouveau gestionnaire d'allocation de la ressource 141, par exemple pour augmenter la ressource fréquentielle de ce dernier, le dispositif d'allocation dynamique de ressources 20 pourra devoir attribuer à ce canal une nouvelle valeur de gain afin de tenir compte de la nouvelle couverture. Il pourra par exemple, augmenter la valeur du gain si les stations au sol sont moins puissantes ou si la zone à couvrir est plus importante que celle précédemment couverte.

Les informations de puissance disponible à bord du satellite 15 de télécommunication peuvent être fournies au dispositif d'allocation dynamique de ressources 20 par l'intermédiaire des télémesures.

Suivant un mode de mise en oeuvre, les modifications apportées lors de la reconfiguration du système de télécommunication peuvent être prédéterminées dans un algorithme d'allocation de ressources par exemple stocké dans une zone mémoire du système et être exécuté à des instants prédéfinis dans le temps. Ce cas de figure peut se rencontrer, par exemple, dans le cas d'un profil de charge régulier sur 24h.

A titre d'exemple, on peut considérer un satellite doté d'une charge utile flexible en fréquence et couvrant deux zones, une à l'est et une autre à l'ouest. Dans ce cas, l'algorithme d'allocation de ressources peut utiliser les décalages horaires entre l'est et l'ouest pour transférer de la ressource en bande passante et éventuellement en gain d'une couverture à l'autre en fonction du taux d'exploitation de la ressource disponible.

Suivant un mode de réalisation, les différents calculs sont réalisés à l'aide d'au moins un algorithme stocké dans une zone mémoire du système d'allocation dynamique de ressources, par exemple une zone mémoire du dispositif d'allocation dynamique 20 de ressources.

Suivant un mode de réalisation, le dispositif d'allocation dynamique 20 de ressources peut être ou comprendre un ordinateur, un processeur, une unité de traitement logique ou tout autre moyen informatique équivalent.

De même, les différents modules présents dans le système d'allocation dynamique de ressources, comme par exemple les modules de calcul, les modules d'allocation de ressources, peuvent être ou comprendre un ou plusieurs ordinateurs, un ou plusieurs processeurs, une ou plusieurs unités de traitement logique une combinaison des éléments précités ou tout autre moyen informatique équivalent.

De façon avantageuse, l'invention permet un ajustement coordonné et automatisé de la configuration des stations sol et de la charge utile du ou des satellites 15 de télécommunication associés aux stations sol en transférant les marges constatées en terme de bande passante et de puissance d'une connexité satellite sur une autre. Ces transferts peuvent être effectués sur la base d'une analyse dynamique des données du ou des satellites 15, par exemple issue des télémesures, et du trafic établi.

Cette capacité d'exploitation automatisée de la flexibilité satellite permet de simplifier les opérations du système de télécommunication et d'accroitre significativement la capacité du système au profit du débit et/ou de la disponibilité des liaisons usagers, dès lors que chaque connexité ne requière pas simultanément une performance maximale.

## Revendications

1. Procédé d'allocation dynamique de ressources pour au moins un réseau d'accès satellite (14) associé à un groupe d'au moins un satellite (15) de télécommunication comprenant une charge utile flexible en fréquence, ledit groupe d'au moins un réseau d'accès satellite (14) comprenant une pluralité de gestionnaires d'allocation de la ressource (141), ledit procédé étant mis en oeuvre par un dispositif d'allocation dynamique (20) de ressources, et étant **caractérisé en ce qu'**il comprend :
- une étape d'acquisition d'un signal représentatif de la valeur de la largeur de bande souhaitée par chaque gestionnaire d'allocation de la ressource (141) de chaque réseau d'accès satellite (14),
- une étape de reconfiguration de la charge utile du groupe d'au moins un satellite (15) de télécommunication, en tenant compte des valeurs de largeur de bande souhaitées par chaque gestionnaires d'allocation de la ressource (141) et des ressources fréquentielles disponibles à bord de chaque satellite (15),
- une étape d'allocation de fréquence aux différents gestionnaires d'allocation de la ressource (141) du groupe d'au moins un réseau d'accès satellite (14), en tenant compte des valeurs de largeur de bande souhaitées par chaque gestionnaires d'allocation de la ressource (141) et des ressources fréquentielles disponibles à bord de chaque satellite (15).

2. Procédé selon la revendication précédente selon lequel
- si la somme des valeurs de largeur de bande souhaitées par chaque gestionnaire d'allocation de la ressource (141) est inférieure aux ressources fréquentielles disponibles du satellite (15), un module d'allocation dynamique de fréquence alloue à chaque gestionnaire d'allocation de la ressource (141) la valeur de la largeur de bande souhaitée,
- si la somme des valeurs de largeur de bande souhaitées par chaque gestionnaire d'allocation de la ressource (141) est supérieure aux ressources fréquentielles disponibles du satellite (15), un module d'allocation dynamique de fréquence alloue à chaque gestionnaire d'allocation de la ressource (141) une valeur de largeur de bande prédéterminée.

3. Procédé selon une des revendications précédentes selon lequel le procédé comprend en outre pour chaque gestionnaire d'allocation de la ressource (141) :
- une étape d'acquisition d'un signal représentatif du débit de donnée du gestionnaire d'allocation de la ressource (141) considéré,
- une étape de calcul d'un taux d'utilisation de la bande passante allouée et de comparaison de ce débit avec une valeur plancher prédéterminée,
- si le taux d'utilisation est inférieur à ladite valeur plancher, une étape de réduction de la valeur de la largeur de bande passante allouée en allouant audit gestionnaire d'allocation de la ressource (141) une valeur de largeur de bande passante correspondant à un taux d'utilisation sensiblement égal à ladite valeur plancher.

4. Procédé selon une des revendications 1 ou 2 selon lequel le procédé comprend en outre pour chaque gestionnaire d'allocation de la ressource (141) :
- une étape d'acquisition d'un signal représentatif du débit de données du gestionnaire d'allocation de la ressource (141) considéré,
- si le débit de données dudit gestionnaire d'allocation de la ressource (141) est inférieur à une valeur nominale prédéterminée alors que la valeur de la bande passante allouée à ce gestionnaire(141) est supérieure à ladite valeur nominale, une étape de réduction de la valeur de la largeur de bande passante allouée en allouant audit gestionnaire d'allocation de la ressource (141) une valeur de largeur de bande passante sensiblement égale à ladite valeur nominale.

5. Procédé selon une des revendications précédentes selon lequel le procédé comprend en outre une étape d'acquisition d'un signal représentatif de la qualité de service associée aux données à transmettre par chaque gestionnaire d'allocation de la ressource (141) et selon lequel le dispositif d'allocation dynamique (20) de ressources augmente en priorité la valeur de la largeur de bande passante des gestionnaires de la ressource (141) les plus prioritaires en utilisant lesdites informations de qualité.

6. Procédé selon une des revendications précédentes selon lequel au moins un satellite (15) est du type multicanaux et selon lequel le procédé comprend en outre une étape de modification du gain d'au moins un des canaux d'au moins un satellite (15) de télécommunication.

7. Système d'allocation dynamique de ressources configuré pour mettre en oeuvre le procédé suivant une des revendications précédentes, **caractérisé en ce qu'**il comprend un dispositif d'allocation dynamique (20) de ressources, au moins un réseau d'accès satellite (14) et au moins un satellite (15) de communication comprenant une charge utile flexible en fréquence,
ledit groupe d'au moins un réseau d'accès satellite (14) comprenant une pluralité de gestionnaires d'allocation de la ressource (141), chaque gestionnaire d'allocation de la ressource étant configuré pour transmettre des donnés à au moins un modem (142), chaque gestionnaire d'allocation de la ressource (141) étant connecté au dispositif d'allocation dynamique de ressources (20) et chaque gestionnaire d'allocation de la ressource (141) étant configurer pour délivrer un signal représentatif de la valeur de bande passante souhaitée et pour transmettre ce signal au dispositif d'allocation dynamique (20) de ressources,
ledit dispositif d'allocation dynamique (20) de ressources comprenant au moins un module de calcul configuré mettre en oeuvre le procédé selon une des revendications précédentes et au moins un module configuré pour allouer une valeur de largeur de bande passante aux différents gestionnaires d'allocation de la ressource (141) du groupe d'au moins un réseau d'accès satellite (14) et pour reconfigurer la charge utile de chaque satellite du groupe d'au moins un satellite (15) de télécommunication.
